(19) Europäisches Patentamt
European Patent Office
Office européen des brevets

(11) EP 4 223 508 A1

(12) **EUROPEAN PATENT APPLICATION**
published in accordance with Art. 153(4) EPC

(43) Date of publication:
**09.08.2023 Bulletin 2023/32**

(21) Application number: **21875642.7**

(22) Date of filing: **28.09.2021**

(51) International Patent Classification (IPC):
***B32B 17/10*** (2006.01) ***C03C 27/12*** (2006.01)
***B60J 1/00*** (2006.01)

(52) Cooperative Patent Classification (CPC):
**B32B 17/00; B32B 17/10; B60J 1/00**

(86) International application number:
**PCT/JP2021/035701**

(87) International publication number:
**WO 2022/071341 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 JP 2020164132**

(71) Applicant: **SEKISUI CHEMICAL CO., LTD.**
**Osaka-shi**
**Osaka**
**530-8565 (JP)**

(72) Inventors:
- **SAKAMOTO, Yuu**
  **Koka-shi, Shiga 528-8585 (JP)**
- **NAKADATE, Junichi**
  **Mishima-gun, Osaka 618-0021 (JP)**
- **HAYASHI, Tetuya**
  **Koka-shi, Shiga 528-8585 (JP)**
- **YAMAMURA, Reiko**
  **Koka-shi, Shiga 528-8585 (JP)**

(74) Representative: **Ter Meer Steinmeister & Partner Patentanwälte mbB**
**Nymphenburger Straße 4**
**80335 München (DE)**

(54) **LAMINATED GLASS FOR SIDE WINDOWS**

(57) A laminated glass for a side window including a first glass substrate, a second glass substrate, and an interlayer film disposed between the first glass substrate and the second glass substrate, wherein the first glass substrate and the second glass substrate have a total thickness of 5 mm or less, and the first glass substrate is located on a vehicle exterior side and is thicker than the second glass substrate and has a thickness of 2 mm or more.

Fig. 1

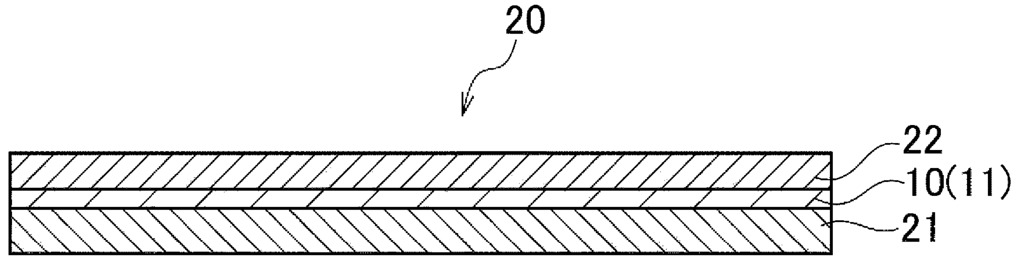


EP 4 223 508 A1

## Description

### Technical Field

The present invention relates to a laminated glass, and more specifically to a laminated glass for side windows.

### Background Art

Laminated glass is less likely to scatter even when scattered by external impact and thus is safe, and therefore has been widely used for windshield and the like of automobiles. Laminated glass usually having a pair of glass plates integrated through an interlayer film for glass made of a thermoplastic resin and the like has been widely known.

For laminated glass, thinning of glass plates has been attempted for the purpose of reduction of weight, and making one of the two glass plates thinner than the other has been considered. Thinning of glass plates results in degradation of various properties such as sound insulation properties and optical properties, and PTLs 1 to 3 and the like have proposed a wide range of improvements for laminated glass used for windshield and the like.

PTL 1 discloses that by setting the thickness of the inner glass plate to 0.4 to 2.0 mm and the thickness of outer glass plate to 1.8 to 2.3 mm and setting the Young's modulus of the core layer to 1 to 20 MPa, which is smaller than the Young's modulus of other layers, in an interlayer film with a multilayer structure, transmittance of infrared rays can be in a predetermined range while improving sound insulation properties.

PTL 2 discloses that both light weight and sound insulation can be achieved in laminated glass in which the inner glass plate is thinner than the outer glass plate and which has an interlayer film with a core layer and an outer layer, by setting the Young's modulus of the core layer to be smaller than that of the outside outer layer and the inside outer layer, and by making the thickness of the outside outer layer smaller than that of the inside outer layer.

Furthermore, PTL 3 attempts to make relative light intensity small in order to reduce optical distortion.

### Citation List

#### Patent Literature

PTL 1: JPA 2015-151308
PTL 2: JPA 2015-168592
PTL 3: JPA 2014-500816

### Summary of Invention

#### Technical Problem

Although single layer glass is often used for automobile side windows, laminated glass is used in some cases to improve safety and sound insulation properties. In recent years, thinning of glass plates has also been attempted for laminated glass for side windows. However, a glass plate with reduced thickness may flap because the edge of a side window is not supported by the body when the window is opened. Flapping due to reduced thickness of the glass plate becomes great in high speed running, and the trouble is that when an opened window is closed during traveling, the side window may not be fitted in the door frame.

In particular, when laminated glass is designed to have sound insulation properties, a resin layer with low Young's modulus is often provided in the interlayer film as disclosed in, for example, PTLs 1, 2, and troubles like flapping described above are more likely to occur. Thus, in practice, further improvement of flexural rigidity is required for laminated glass for side windows in which the thickness of the glass plate is reduced.

In such circumstances, an object of the present invention is to provide a laminated glass with high flexural rigidity suitable for side windows even when the glass plate is thinned and when for example, an interlayer film with high sound insulation properties is used.

#### Solution to Problem

The present inventors have conducted intensive studies and as a result have found that a laminated glass including layers having a different thickness is more advantageous in terms of flexural rigidity than a usual laminated glass in which two glass substrates have the same thickness. Then, the present inventors have focused on the above

knowledge and found that the problem of the present invention can be solved by setting the thickness of the glass substrate on a vehicle exterior side at a constant value or more even when two glass substrates have a total thickness of as thin as 5 mm or less, and have completed the present invention.

The gist of the present invention is as shown in the following [1] to [42].

[1] A laminated glass for a side window, comprising a first glass substrate, a second glass substrate, and an interlayer film disposed between the first glass substrate and the second glass substrate, wherein

the first glass substrate and the second glass substrate have a total thickness of 5 mm or less, and
the first glass substrate is located on a vehicle exterior side and is thicker than the second glass substrate and has a thickness of 2 mm or more.

[2] The laminated glass for a side window according to [1] above, wherein

the interlayer film comprises at least a first resin layer, and
the first resin layer has a Young's modulus at 23°C of less than 1 MPa.

[3] The laminated glass for a side window according to [2] above, wherein

the interlayer film further comprises a second resin layer provided on one surface of the first resin layer, and
the second resin layer has a Young's modulus at 23°C of higher than the Young's modulus at 23°C of the first resin layer.

[4] The laminated glass for a side window according to [3] above, wherein

the interlayer film further comprises a third resin layer provided on the other surface of the first resin layer, and
the third resin layer has a Young's modulus at 23°C of higher than the Young's modulus at 23°C of the first resin layer.

[5] The laminated glass for a side window according to any one of [1] to [4] above, wherein a ratio of the thickness of the first glass substrate to the total thickness (thickness of the first glass substrate/ total thickness) is 0.6 or more.
[6] The laminated glass for a side window according to any one of [1] to [5] above, wherein the interlayer film has an equivalent stiffness at 23°C of 1.5 MPa or more.
[7] The laminated glass for a side window according to any one of [1] to [6] above, wherein a ratio of the thickness of the interlayer film to the thickness of the first glass substrate (thickness of the interlayer film/ thickness of the first glass substrate) is 0.1 or more and 0.5 or less.
[8] The laminated glass for a side window according to any one of [1] to [7] above, wherein

the interlayer film comprises at least the first resin layer, and
the first resin layer comprises a filler.

[9] The laminated glass for a side window according to [8] above, wherein the filler has a secondary average particle size (d50) of 0.01 μm or more and 5 μm or less.
[10] The laminated glass for a side window according to [8] or [9] above, wherein the filler is at least one selected from the group consisting of a silica particle and a calcium carbonate particle.
[11] The laminated glass for a side window according to any one of [8] to [10] above, wherein the content of the filler in the first resin layer is 1 part by mass or more and 70 parts by mass or less based on 100 parts by mass of a thermoplastic resin.
[12] The laminated glass for a side window according to any one of [1] to [11] above, wherein the interlayer film comprises at least the first resin layer and the first resin layer comprises a polyvinyl acetal resin.
[13] The laminated glass for a side window according to any one of [1] to [12] above, wherein

the interlayer film comprises at least the first resin layer, and
the first resin layer comprises a plasticizer.

[14] The laminated glass for a side window according to [13] above, wherein in the first resin layer, the content of the plasticizer is 50 parts by mass or more and 100 parts by mass or less based on 100 parts by mass of the thermoplastic resin.

[15] The laminated glass for a side window according to any one of [1] to [14] above, wherein the first glass substrate and the second glass substrate have a total thickness of 2.6 mm or more.
[16] The laminated glass for a side window according to any one of [1] to [15] above, wherein the first glass substrate has a thickness of 4.2 mm or less.
[17] The laminated glass for a side window according to any one of [1] to [16] above, wherein the second glass substrate has a thickness of 0.5 mm or more and 2.2 mm or less.
[18] The laminated glass for a side window according to any one of [1] to [17] above, wherein the ratio of the thickness of the first glass substrate to the total thickness (thickness of the first glass substrate/ total thickness) is 0.85 or less.
[19] The laminated glass for a side window according to any one of [1] to [18] above, wherein the interlayer film has a thickness of 0.1 mm or more and 2.0 mm or less.
[20] The laminated glass for a side window according to any one of [1] to [19] above, wherein the interlayer film comprises at least the first resin layer and the first resin layer has a Young's modulus at 23°C of 0.3 MPa or more.
[21] The laminated glass for a side window according to any one of [1] to [20] above, wherein the interlayer film comprises at least the first resin layer and the first resin layer has a glass transition temperature of -20°C or more and 15°C or less.
[22] The laminated glass for a side window according to any one of [1] to [21] above, wherein the interlayer film comprises at least the first resin layer and the first resin layer comprises a polyvinyl acetal resin in which the content of hydroxyl groups is 17% by mole or more and 30% by mole or less.
[23] The laminated glass for a side window according to any one of [1] to [22] above, wherein the interlayer film comprises the first resin layer and the second resin layer provided on one surface of the first resin layer.
[24] The laminated glass for a side window according to [23] above, wherein the second resin layer has a Young's modulus at 23°C of 3 MPa or more and 700 MPa or less.
[25] The laminated glass for a side window according to [23] or [24] above, wherein the first resin layer has a glass transition temperature lower than the glass transition temperature of the second resin layer.
[26] The laminated glass for a side window according to any one of [23] to [25] above, wherein the second resin layer has a glass transition temperature of 0°C or more and 60°C or less.
[27] The laminated glass for a side window according to any one of [23] to [26] above, wherein the second resin layer comprises a polyvinyl acetal resin.
[28] The laminated glass for a side window according to [27] above, wherein the content of hydroxyl groups in the polyvinyl acetal resin the second resin layer comprises is 25% by mole or more and 38% by mole or less.
[29] The laminated glass for a side window according to any one of [23] to [28] above, wherein both the first and the second resin layers comprise a polyvinyl acetal resin and the content of hydroxyl groups in the polyvinyl acetal resin the first resin layer comprises is smaller than the content of hydroxyl groups in the polyvinyl acetal resin the second resin layer comprises.
[30] The laminated glass for a side window according to any one of [23] to [29] above, wherein the second resin layer comprises a plasticizer and the content of the plasticizer in the second resin layer is 10 parts by mass or more and 50 parts by mass or less based on 100 parts by mass of the thermoplastic resin.
[31] The laminated glass for a side window according to any one of [23] to [30] above, wherein the content of the plasticizer in the first resin layer based on 100 parts by mass of the thermoplastic resin is higher than the content of the plasticizer in the second resin layer based on 100 parts by mass of the thermoplastic resin.
[32] The laminated glass for a side window according to any one of [23] to [31] above, wherein the interlayer film further comprises a third resin layer provided on the other surface of the first resin layer.
[33] The laminated glass for a side window according to [32] above, wherein the third resin layer has a Young's modulus at 23°C of 3 MPa or more and 700 MPa or less.
[34] The laminated glass for a side window according to [32] or [33] above, wherein the first resin layer has a glass transition temperature lower than the glass transition temperature of both the second and third resin layers.
[35] The laminated glass for a side window according to any one of [32] to [34] above, wherein the third resin layer has a glass transition temperature of 0°C or more and 60°C or less.
[36] The laminated glass for a side window according to any one of [32] to [35] above, wherein the third resin layer comprises a polyvinyl acetal resin.
[37] The laminated glass for a side window according to any one of [32] to [36] above, wherein the content of hydroxyl groups in the polyvinyl acetal resin the third resin layer comprises is 25% by mole or more and 38% by mole or less.
[38] The laminated glass for a side window according to any one of [32] to [37] above, wherein all the first, second and third resin layers comprise a polyvinyl acetal resin and the content of hydroxyl groups in the polyvinyl acetal resin the first resin layer comprises is smaller than the respective contents of hydroxyl groups in the polyvinyl acetal resin the second and the third resin layers comprise.
[39] The laminated glass for a side window according to any one of [32] to [38] above, wherein the third resin layer comprises a plasticizer and the content of the plasticizer in the third resin layer is 10 parts by mass or more and 50

parts by mass or less based on 100 parts by mass of the thermoplastic resin.
[40] The laminated glass for a side window according to any one of [32] to [39] above, wherein the content of the plasticizer in the first resin layer based on 100 parts by mass of the thermoplastic resin is higher than the respective contents of the plasticizer in the second and the third resin layers based on 100 parts by mass of the thermoplastic resin.
[41] An automobile side window comprising the laminated glass for a side window according to any one of [1] to [40].
[42] Use of the laminated glass for a side window according to any one of [1] to [40] for an automobile side window.

Advantageous Effects of Invention

The present invention can provide a laminated glass with high flexural rigidity suitable for side windows even when the glass plate is thinned and for example, an interlayer film with high sound insulation properties is used.

Brief Description of Drawings

[Fig. 1] Fig. 1 is a cross-sectional view illustrating an example of an interlayer film for laminated glass and laminated glass.
[Fig. 2] Fig. 2 is a cross-sectional view illustrating an example of an interlayer film for laminated glass and laminated glass.
[Fig. 3] Fig. 3 is a cross-sectional view illustrating an example of an interlayer film for laminated glass and laminated glass.
[Fig. 4] Fig. 4 is a schematic view illustrating the method for measuring flexural rigidity of laminated glass.

Description of Embodiments

<Laminated glass>

The laminated glass of the present invention is a laminated glass used for automobile side windows, comprising a first glass substrate, a second glass substrate, and an interlayer film disposed between the first glass substrate and the second glass substrate, and the first glass substrate is located on a vehicle exterior side.

(Thickness of glass)

In the present invention, the total thickness of the first glass substrate and the second glass substrate is 5 mm or less. When the total thickness is more than 5 mm, the laminated glass is not regarded as thinner than usual laminated glass for side windows, and lightweight and thinning of glass cannot be achieved. The total thickness of the first glass substrate and the second glass substrate is preferably 4.5 mm or less, and more preferably 4.2 mm or less from the viewpoint of achieving lightweight and thinning of glass.

Furthermore, the total thickness of the first glass substrate and the second glass substrate is preferably 2.6 mm or more. When the total thickness is 2.6 mm or more, the glass substrates surely have a certain thickness and designing appropriate flexural rigidity of laminated glass is easy. From the above point of view, the total thickness of the first glass substrate and the second glass substrate is more preferably 2.8 mm or more, further preferably 3.0 mm or more, and still more preferably 3.7 mm or more.

In the present invention, the first glass substrate is thicker than the second glass substrate and has a thickness of 2 mm or more. When the first glass substrate has a thickness equal to or smaller than that of the second glass substrate or has a thickness of less than 2 mm, obtaining resistance to external impact while thinning the laminated glass is difficult, and achieving flexural rigidity required for side windows is difficult. To obtain flexural rigidity suitable for side windows while improving resistance to external impact, the first glass substrate has a thickness of preferably 2.2 mm or more, and more preferably 2.4 mm or more.

The first glass substrate needs to have a certain thickness or less in order to achieve thinning and lightweight of laminated glass, and has a thickness of preferably 4.2 mm or less, more preferably 3.6 mm or less, and further preferably 3.2 mm or less.

While the thickness of the second glass substrate is not particularly limited as long as the total thickness of the first and second glass substrates and the thickness of the first glass substrate can be adjusted to the above predetermined range, the second glass substrate has a thickness of, for example, 0.5 mm or more, preferably 0.8 mm or more, more preferably 1 mm or more, and further preferably 1.2 mm or more in order to give certain mechanical strength to laminated

glass. It is preferable that the second glass substrate is thin in order to achieve thinning and lightweight of laminated glass, and the second glass substrate has a thickness of preferably 2.2 mm or less, more preferably 1.9 mm or less and further preferably 1.7 mm or less.

The ratio of the thickness of the first glass substrate to the total thickness of the first and the second glass substrates (thickness of the first glass substrate/ total thickness) is preferably 0.6 or more, and more preferably 0.65 or more. When the ratio of thickness is 0.6 or more, excellent flexural rigidity suitable for side windows is easily obtained even in laminated glass having a total thickness of 5 mm or less.

Furthermore, the ratio of thickness (thickness of the first glass substrate/ total thickness) is preferably 0.85 or less, more preferably 0.80 or less, and further preferably 0.78 or less for the second glass substrate to have equal to or more than a certain thickness and to obtain mechanical strength of the second glass substrate.

<First resin layer>

The interlayer film according to the present invention has at least the first resin layer. The first resin layer needs to have high tan δ at the glass transition temperature in order to improve sound insulation properties. Since tan δ and Young's modulus are in a trade-off relationship, it is preferable that the first resin layer has a Young's modulus of less than 1 MPa to provide sound insulation properties. The first resin layer has a Young's modulus of preferably 0.9 MPa or less, and more preferably 0.8 MPa or less from the viewpoint of sound insulation properties.

Meanwhile, it is preferable that the first resin layer has high Young's modulus from the viewpoint of flexural rigidity, and has a Young's modulus of, for example, 0.3 MPa or more, preferably 0.4 MPa or more, more preferably 0.55 MPa or more and further preferably 0.65 MPa or more.

Young's modulus may be adjusted by changing, for example, the amount and the type of thermoplastic resin, mixing of plasticizer, the amount and the type of the plasticizer, mixing of filler or the amount and the type of the filler in the first resin layer. Young's modulus may also be adjusted depending on the amount and the type of functional groups that the thermoplastic resin has. For example, Young's modulus tends to be reduced when, for example, a large amount of plasticizer is mixed. By contrast, Young's modulus may be increased when, for example, a large amount of filler is mixed. Furthermore, in the case of using a polyvinyl acetal resin, Young's modulus tends to be reduced when the amount of hydroxyl groups is reduced and the average polymerization degree is reduced. Furthermore, in the case of using an ethylene-vinyl acetate copolymer resin, an ethylene-acrylic acid copolymer resin, an ionomer resin, a polyurethane resin, a polyvinyl alcohol resin, a thermoplastic elastomer or the like, Young's modulus tends to be reduced when the average polymerization degree is reduced.

For the measurement of Young's modulus, a specimen having a thickness of about 800 μm is fabricated from a resin or a resin composition for forming the first resin layer and a tensile test is performed in a thermostatic chamber at 23°C at 200 mm/ minute, and the slope in the small strain region in the resulting stress-strain curve is determined to obtain the Young's modulus. Specific methods of measurement are as described in Examples. When the first resin layer does not have a thickness of about 800 μm, a stress-strain curve is prepared after conversion from the thickness of the specimen used.

The specimen for measuring Young's modulus may be fabricated by mixing components for forming the first resin layer to fabricate a resin composition, press-molding the resin composition (when the first resin layer is made of a thermoplastic resin, press-molding the thermoplastic resin), and then punching the resin. The specimen may also be fabricated by separating the first resin layer from the interlayer film, press-molding the resin layer (e.g., at 150°C for 10 minutes without pressurization and then at 150°C for 10 minutes with pressurization) and then punching. For the second and the third resin layers described later, a specimen may be fabricated by the same method to measure Young's modulus.

(Glass transition temperature)

The first resin layer has a glass transition temperature of preferably 15°C or less. By setting the glass transition temperature of the first resin layer at 15°C or less, flexibility of the first resin layer is increased and sound insulation properties of the interlayer film is easily improved. The first resin layer has a glass transition temperature of more preferably 10°C or less, further preferably 5°C or less and particularly preferably 0°C or less from the viewpoint of further improvement of sound insulation properties. The first resin layer has a glass transition temperature of preferably -20°C or more, more preferably -15°C or more in order to improve flexural rigidity, although the glass transition temperature is not particularly limited.

The glass transition temperature may be adjusted by changing, for example, the amount and the type of thermoplastic resin, mixing of plasticizer and the amount and the type of the plasticizer in the first resin layer. The glass transition temperature may also be adjusted depending on the amount and the type of functional groups that the thermoplastic resin has. For example, the glass transition temperature tends to be reduced when, for example, the amount of plasticizer is increased. Furthermore, when polyvinyl acetal resin is used, the glass transition temperature can be

reduced by reducing the amount of hydroxyl groups.

For the method of measuring glass transition temperature, when the interlayer film has a single layer, viscoelasticity of the interlayer film is measured by a viscoelastometer, and the measured value is regarded as the glass transition temperature of the first resin layer. When the interlayer film has multiple layers, the first resin layer is separated from the interlayer film, and the resulting first resin layer is press-molded at 150°C to prepare a sample for measurement. Then viscoelasticity of the resulting measurement sample is measured using a viscoelastometer. Viscoelasticity is measured in a shear mode at a temperature increase rate of 3°C/ minute from -30°C to 100°C under conditions of a frequency of 1 Hz and a strain of 1%. The glass transition temperature of the second and the third resin layers described later may also be measured in the same manner.

(Thermoplastic resin (1))

The first resin layer comprises a thermoplastic resin. In the following description, the thermoplastic resin that the first resin layer comprises may be referred to as thermoplastic resin (1). When the first resin layer comprises a thermoplastic resin, the first resin layer works better as an adhesive layer, and has excellent adhesiveness to the glass substrate and other layers of the interlayer film. The thermoplastic resin is a matrix component in the interlayer film, and when a component such as a filler is included, the components added are dispersed in the thermoplastic resin or a mixture of the thermoplastic resin and a plasticizer described later.

Examples of thermoplastic resins include, but are not limited to, a polyvinyl acetal resin, an ethylene-vinyl acetate copolymer resin, an ethylene-acrylic acid copolymer resin, an ionomer resin, a polyurethane resin, a polyvinyl alcohol resin and a thermoplastic elastomer. Using these resins enhances adhesiveness to the glass substrate. One of the thermoplastic resins may be used alone or two or more of them may be used in combination in the first resin layer.

Of those listed above, at least one selected from a polyvinyl acetal resin and an ethylene-vinyl acetate copolymer resin is preferred. In particular, a polyvinyl acetal resin is more preferred because it exhibits excellent adhesiveness and sound insulation properties when used in combination with a plasticizer. In the following description, the polyvinyl acetal resin in the first resin layer may be referred to as polyvinyl acetal resin (1). Details of polyvinyl acetal resin (1) will be described later.

(Plasticizer (1))

It is preferable that the first resin layer of the present invention comprises a plasticizer. The plasticizer that the first resin layer comprises may be referred to as plasticizer (1). The first resin layer becomes flexible when it includes the plasticizer (1), and as a result flexibility of laminated glass is improved and penetration resistance and sound insulation properties are easily improved. Furthermore, the plasticizer (1) enables high adhesiveness to the glass substrate and other layers of the interlayer film. It is also particularly effective to include the plasticizer (1) when polyvinyl acetal resin (1) is used as a thermoplastic resin. Details of the plasticizer (1) will be described later.

In the first resin layer, the content of the plasticizer (1) (hereinafter may be written as content (1)) is 20 parts by mass or more, preferably 50 parts by mass or more, more preferably 55 parts by mass or more, and further preferably 60 parts by mass or more based on 100 parts by mass of the thermoplastic resin (1). Furthermore, the content (1) of the plasticizer (1) is preferably 100 parts by mass or less, more preferably 90 parts by mass or less, further preferably 85 parts by mass or less, and particularly preferably 80 parts by mass or less. When the content (1) is the lower limit or more, flexibility of the interlayer film is increased and the interlayer film is easily handled, and sound insulation properties are also improved. Furthermore, when the content (1) is the upper limit or less, the laminated glass tends to have high penetration resistance.

While flexural rigidity of laminated glass tends to be reduced when the content (1) is increased, the flexural rigidity can be sufficiently improved by including a filler such as silica particles in the first resin layer as described later.

The first resin layer comprises a thermoplastic resin, or a thermoplastic resin and a plasticizer as the main component. The total amount of the thermoplastic resin and the plasticizer is preferably 60% by mass or more, more preferably 70% by mass or more and 100% by mass or less, and further preferably 80% by mass or more and less than 100% by mass based on the total amount of the first resin layer.

(Filler)

It is preferable that the first resin layer comprises a filler. Inclusion of a filler in the first resin layer increases Young's modulus and improves flexural rigidity of laminated glass, and a laminated glass more suitable for side windows can be provided. The filler includes inorganic particles, and specific examples thereof include at least one selected from a silica particle and a calcium carbonate particle. The filler is preferably a silica particle.

In the first resin layer, a filler may be used alone, or two or more fillers may be used in combination.

It is preferable that the filler included in the first resin layer have an average secondary particle size (d50) of 0.01 μm or more and 5 μm or less. When the filler has a secondary particle size of 0.01 μm or more, flexural rigidity can be improved by the filler. Furthermore, producing the filler such as silica particles is easy. Meanwhile, when the filler has a secondary particle size of 5 μm or less, the filler is easily dispersed in the first resin layer. Furthermore, reduction of visibility of laminated glass due to filler can be prevented.

From the above points of view, the filler has an average secondary particle size of more preferably 4 μm or less, further preferably 3 μm or less, and further more preferably 2.2 μm or less. Furthermore, the filler has an average secondary particle size of preferably 0.05 μm or more, more preferably 0.1 μm or more, and further preferably 0.3 μm or more from the viewpoint of easy production and flexural rigidity.

The average secondary particle size of the filler may be determined by isolating the filler dispersed in the first resin layer and measuring the average value (D50) by laser diffraction particle size distribution analysis.

Silica particles include several types depending on the method of production, and examples thereof include wet silica produced by a wet method and dry silica produced by a dry method. Examples of dry silica include fumed silica. Examples of wet silica include precipitated silica produced by a precipitation method, gel-method silica produced by a gel method, and colloidal silica which is silica particles dispersed in water.

Wet silica is preferred as the silica particle. Any one selected from precipitated silica and gel-method silica is more preferred as wet silica. Use of wet silica suppresses generation of streak unevenness called a flow mark on the surface of the first resin layer, and thus defective appearance and uneven thickness is less likely to occur. Thus, laminated glass having excellent sound insulation properties and flexural rigidity can be easily obtained even if the thickness of the first resin layer is reduced.

Silica particles in the form of coagulated particles may be used. Precipitated silica and gel-method silica used in the interlayer film may be those prepared by pulverizing coagulated particles. The silica particle may be pulverized by either crushing or disintegration. "Disintegration" means disintegrating part of coagulation of coagulated particles. "Crushing" means simply crushing particles. Precipitated silica is particularly preferred because the average secondary particle size can be easily adjusted to a suitable range by pulverization. One silica particle may be used alone or two or more of them may be used in combination.

While silica particles may not be surface-treated and may not have coating of an organic compound, silica particles may be surface-treated by a known method to have a coating of an organic compound. When silica particles are pulverized, surface treatment may be performed after pulverizing or before pulverizing silica particles. Surface treatment may be performed using a known surface treatment agent. Suitable examples of surface treatment agents include a silane coupling agent.

The method of treating silica particles with a surface treatment agent such as a silane coupling agent is not particularly limited as long as the method allows the surface treatment agent to be attached to the surface of silica particles. For example, a surface treatment agent such as a silane coupling agent or a solution thereof may be mixed with silica particles, or the surface treatment agent or a solution thereof may be sprayed to the surface of silica particles. When the solution of the surface treatment agent is applied to the surface of silica particles, solvent may be removed by, for example, drying. Furthermore, the reaction between the surface treatment agent and the surface of silica particles may be allowed to proceed by heating and the like with the surface treatment agent attached to the surface.

The content of the filler in first resin layer is preferably 1 part by mass or more, more preferably 5 parts by mass or more, further preferably 12 parts by mass or more, and particularly preferably 15 parts by mass or more based on 100 parts by mass of the thermoplastic resin (1). When the content of the filler is the lower limit or more, flexural rigidity of laminated glass can be increased. The content of the filler is preferably 70 parts by mass or less, more preferably 60 parts by mass or less, further preferably 50 parts by mass or less, still more preferably 40 parts by mass or less, and particularly preferably 30 parts by mass or less based on 100 parts by mass of the thermoplastic resin (1). When the content of the filler is the upper limit or less, sound insulation properties are likely to be improved. Furthermore, reduction of visibility due to filler can be suppressed.

The first resin layer may include, if necessary, an additive other than the above, such as an infrared absorber, an ultraviolet absorber, an antioxidant, a light stabilizer, a fluorescent brightener, a crystal nucleating agent, a dispersant, a dye, a pigment, a metal carboxylate and a heat insulation material.

[Layer structure]

The interlayer film according to the present invention is a monolayer made of the first resin layer and may have a single layer structure. As shown in Fig. 1, for the interlayer film 10 with a single layer structure, one surface and the surface opposite to the one surface of the first resin layer 11 each may be the surfaces to be bonded to the first and the second glass substrates 21, 22. The first resin layer 11 may be bonded to the first and the second glass substrates 21, 22 through another layer such as an adhesive layer.

Furthermore, it is preferable that the interlayer film has a multiple layer structure with two or more resin layers.

More specifically, the interlayer film 10 may have the second resin layer 12 in addition to the first resin layer 11 as shown in Fig. 2. The second resin layer 12 is provided on one surface of the first resin layer 11. When the interlayer film 10 has the second resin layer 12 in addition to the first resin layer 11, both sound insulation properties and flexural rigidity of laminated glass can be easily improved.

The second resin layer comprises a thermoplastic resin. The thermoplastic resin that the second resin layer comprises may be referred to as thermoplastic resin (2). The interlayer film 10 may have a two-layer structure composed of the first and the second resin layers 11, 12 as shown in Fig. 2. In the structure shown in Fig. 2, the surface of the second resin layer 12 opposite to the first resin layer 11 and the surface of the first resin layer 11 opposite to the second resin layer 12 may be the surface to be bonded to either of the glass substrates 21, 22.

While Fig. 2 illustrates an embodiment in which the second resin layer 12 is bonded to the first glass substrate 21 and the first resin layer 11 is bonded to the second glass substrate 22, an embodiment in which the first resin layer 11 is bonded to the first glass substrate 21 and the second resin layer 12 is bonded to the second glass substrate 22 may also be available. Furthermore, the second resin layer 12 and the first resin layer 11 may be bonded to the glass substrates 21, 22 respectively, through another layer such as an adhesive layer.

It is more preferred that the interlayer film 10 has the second and the third resin layers 12, 13 in addition to the first resin layer 11 as shown in Fig. 3. The third resin layer comprises a thermoplastic resin. The thermoplastic resin that the third resin layer 13 comprises may be referred to as thermoplastic resin (3).

The third resin layer 13 is provided on the surface (the other surface) opposite to the one surface of the first resin layer 11 on which the second resin layer 12 is provided. When the interlayer film 10 comprises the second and the third resin layers 12, 13 in addition to the first resin layer 11, sound insulation properties and flexural rigidity can be more easily improved. It is preferable that in the structure of Fig. 3, the second and the third resin layers 12, 13 constitute the surface layer of the interlayer film 10. More specifically, the surface of the second resin layer 12 opposite to the first resin layer 11 and the surface of the third resin layer 13 opposite to the first resin layer 11 may be the surface to be bonded to either of the first and the second glass substrates 21, 22.

While Fig. 3 illustrates an embodiment in which the second resin layer 12 is bonded to the first glass substrate 21 and the third resin layer 13 is bonded to the second glass substrate 22, an embodiment in which the second resin layer 12 is bonded to the second glass substrate 22 and the third resin layer 13 is bonded to the first glass substrate 21 may also be available. Furthermore, the second resin layer 12 and the second resin layer 13 may be bonded to the glass substrates 21, 22 respectively, through another layer such as an adhesive layer.

In the above configurations, another layer may be disposed between the second resin layer 12 and the first resin layer 11, and between the first resin layer 11 and the third resin layer 13.

Other layers may be a polyethylene terephthalate film or an adhesive layer. It is preferable that the second resin layer 12 and the first resin layer 11, and the first resin layer 11 and the third resin layer 13 are directly stacked, respectively.

(Young's modulus of second and third resin layers)

The second resin layer preferably has a higher Young's modulus at 23°C than the Young's modulus at 23°C of the first resin layer, and the second and the third resin layers more preferably have a higher Young's modulus than the Young's modulus at 23°C of the first resin layer. By setting the Young's modulus of the first resin layer to be low as described above and setting the Young's modulus of the second resin layer or the second and the third resin layers to be high, flexural rigidity of laminated glass can be improved while keeping sound insulation properties.

More specifically, the second resin layer, and the second and the third resin layers have a Young's modulus at 23°C of preferably 3 MPa or more, more preferably 5 MPa or more, further preferably 10 MPa or more, and still more preferably 25 MPa or more. Furthermore, the second resin layer, and the second and the third resin layers have a Young's modulus at 23°C of preferably 700 MPa or less, more preferably 400 MPa or less, further preferably 200 MPa or less, and still more preferably 100 MPa or less from the viewpoint of handling and the like.

The method of adjusting Young's modulus is as described in the section of the first resin layer. For example, when the amount of plasticizer added is reduced, Young's modulus tends to be increased. When, for example, a polyvinyl acetal resin is used, Young's modulus tends to be increased by increasing the amount of hydroxyl groups or increasing the average polymerization degree. Furthermore, when an ethylene-vinyl acetate copolymer resin, an ethylene-acrylic acid copolymer resin, an ionomer resin, a polyurethane resin, a polyvinyl alcohol resin, a thermoplastic elastomer or the like is used, Young's modulus tends to be increased by increasing the average polymerization degree.

(Glass transition temperature of second and third resin layers)

It is preferable that in the interlayer film with a multilayer structure, the first resin layer has a glass transition temperature lower than the glass transition temperature of the second resin layer. It is more preferred that the first resin

layer has a glass transition temperature lower than the glass transition temperature of the second and the third resin layer. By providing the second resin layer, or the second and the third resin layers having glass transition temperature higher than that of the first resin layer, flexural rigidity of laminated glass can be further increased while improving sound insulation properties.

To further increase flexural rigidity and sound insulation properties of laminated glass, the absolute value of the difference between the glass transition temperature of the first resin layer and the glass transition temperature of the second resin layer or that of the second and the third resin layers is preferably 10°C or more, more preferably 20°C or more, further preferably 30°C or more, and particularly preferably 35°C or more. To improve handling properties, the absolute value of the difference between the glass transition temperature of the first resin layer and the glass transition temperature of the second resin layer or that of the second and the third resin layers is preferably 70°C or less, and more preferably 55°C or less.

Furthermore, the second resin layer or the second and the third resin layers have a glass transition temperature of preferably 0°C or more. By setting glass transition temperature of the second resin layer or that of the second and the third resin layers at 0°C or more, the difference from the glass transition temperature of the first resin layer is easily increased, and sound insulation properties, handling properties and penetration resistance can be easily improved. From such a point of view, the second resin layer or the second and the third resin layers have a glass transition temperature of more preferably 10°C or more, and further preferably 20°C or more and particularly preferably 30°C or more. The second resin layer or the second and the third resin layers have a glass transition temperature of 60°C or less, and more preferably 50°C or less, which is not particularly limited.

The method of adjusting glass transition temperature is as described in the above section of the first resin layer. For example, the glass transition temperature tends to be increased when the amount of plasticizer is reduced. Furthermore, in the case of using polyvinyl butyral resin, the glass transition temperature tends to be increased when the amount of hydroxyl groups is increased.

(Thermoplastic resin (2), (3))

The thermoplastic resins (2), (3) used for the second resin layer and the third resin layer are not particularly limited, and may be selected and used from the thermoplastic resins listed above as a thermoplastic resin which can be used for the thermoplastic resin (1). One thermoplastic resin may be used alone or two or more resins may be used in combination as the thermoplastic resins (2), (3).

At least one selected from a polyvinyl acetal resin and an ethylene-vinyl acetate copolymer resin is preferred as the thermoplastic resins (2), (3). In particular, a polyvinyl acetal resin is more preferred because it exhibits excellent adhesiveness to glass when used in combination with a plasticizer. In short, in the present invention, it is preferable that the thermoplastic resins (1) and (2) are a polyvinyl acetal resin and it is more preferred that the thermoplastic resins (1), (2) and (3) are a polyvinyl acetal resin.

In the following description, the polyvinyl acetal resin in the second resin layer and the third resin layer may be described as polyvinyl acetal resin (2) and polyvinyl acetal resin (3), respectively. Details of polyvinyl acetal resin (2) and polyvinyl acetal resin (3) will be described later.

The polyvinyl acetal resin (2) or the polyvinyl acetal resins (2) and (3) may be the same as the polyvinyl acetal resin (1), but it is preferable that they are different from the polyvinyl acetal resin (1) from the viewpoint of improving sound insulation properties and flexural rigidity. Furthermore, the polyvinyl acetal resins (2) and (3) may be different from each other, but are preferably the same from the viewpoint of productivity and the like.

(Plasticizer (2), (3))

It is preferable that the second resin layer comprises a plasticizer and the third resin layer also comprises a plasticizer. In other words, in the interlayer film, it is preferable that both the first and the second resin layers comprise a plasticizer, and it is more preferred that all the first, second and third resin layers comprise a plasticizer. By including a plasticizer in all layers, the plasticizer in the first layer remains in the first layer without migration to other layers, allowing sound insulation properties to be further improved.

The thermoplastic resin that the second and the third resin layers comprise may be referred to as plasticizer (2) and plasticizer (3).

The second and the third resin layers become flexible when plasticizer is included therein, and as a result flexibility and penetration resistance and the like of laminated glass is improved. Furthermore, adhesiveness to glass substrates such as glass plates and other layers of the interlayer film can also be easily improved. Furthermore, it is particularly effective to include a plasticizer in the second and the third resin layers when polyvinyl acetal resins (2), (3) are used as a thermoplastic resin. Thus, it is particularly preferred that a polyvinyl acetal resin is used as a thermoplastic resin in all the first to third resin layers and all the first to third resin layers include a plasticizer.

The plasticizers (2), (3) may be the same as or different from the plasticizer (1). The plasticizers (2), (3) may be the same or different from each other. One plasticizer may be used alone or two or more plasticizers may be used in combination as the plasticizer (2) and the plasticizer (3), respectively.

The content of the plasticizer (2) in the second resin layer (hereinafter may be referred to as content (2)) based on 100 parts by mass of the thermoplastic resin (2) and the content of the plasticizer (3) in the third resin layer (hereinafter may be referred to as content (3)) based on 100 parts by mass of the thermoplastic resin (3) is preferably 10 parts by mass or more, respectively. When the above content (2) and content (3) are the lower limit or more, the interlayer film becomes more flexible and handling of the interlayer film is easy. Furthermore, the plasticizer in the first resin layer remains in the first resin layer, and thus facilitates the balance between sound insulation properties and flexural rigidity. From the above point of view, the content (2) and the content (3) are more preferably 15 parts by mass or more, further preferably 20 parts by mass or more, and particularly preferably 24 parts by mass or more, respectively.

Furthermore, the content (2) and the content (3) are preferably 50 parts by mass or less, more preferably 45 parts by mass or less, further preferably 40 parts by mass or less, and still more preferably 35 parts by mass or less, respectively. When each of the above content (2) and the content (3) are the upper limit or less, flexural rigidity of laminated glass can be increased.

To increase sound insulation properties of laminated glass, the content (1) of the plasticizer in the first resin layer is preferably higher than the content (2) and higher than the content (3), and is further preferably higher than both the contents (2) and (3).

Furthermore, to further improve sound insulation properties of laminated glass, the absolute value of the difference between the content (2) and the content (1) and the absolute value of the difference between the content (3) and the content (1) is preferably 10 parts by mass or more, more preferably 15 parts by mass or more, and further preferably 25 parts by mass or more, respectively. The absolute value of the difference between the content (2) and the content (1) and the absolute value of the difference between the content (3) and the content (1) is preferably 80 parts by mass or less, more preferably 70 parts by mass or less, further preferably 60 parts by mass or less, and particularly preferably 50 parts by mass or less from the viewpoint of increase in rigidity.

Furthermore, each of the second and the third resin layers comprises a thermoplastic resin, or a thermoplastic resin and a plasticizer as the main component. The total content of the thermoplastic resin and the plasticizer is usually 70% by mass or more, preferably 80% by mass or more, and more preferably 90% by mass or more and 100% by mass or less based on each of the second and the third resin layers.

Each of the second and the third resin layers may comprise a filler. Examples of fillers include at least one selected from a silica particle and a calcium carbonate particle, and a silica particle is preferred. Details of the filler are as described above.

The second and the third resin layer may include, if necessary, an additive other than the plasticizers, such as an infrared absorber, an ultraviolet absorber, an antioxidant, a light stabilizer, a fluorescent brightener, a crystal nucleating agent, a dispersant, a dye, a pigment, a metal carboxylate and a heat insulation material.

(Thickness of interlayer film)

The interlayer film has a thickness of preferably 0.1 mm or more and 2.0 mm or less, which is not particularly limited. By setting the thickness of the interlayer film to 0.1 mm or more, adhesiveness of the interlayer film and penetration resistance and sound insulation properties of the laminated glass can be improved. Furthermore, by setting the thickness of the interlayer film to 2.0 mm or less, transparency is easily obtained and the total thickness of the laminated glass can be reduced. The interlayer film has a thickness of more preferably 0.2 mm or more, further preferably 0.3 mm or more, and still more preferably 0.55 mm or more. The interlayer film has a thickness of more preferably 1.5 mm or less, further preferably 1.0 mm or less, and still more preferably 0.9 mm or less.

The ratio of the thickness of the interlayer film to the thickness of the first glass substrate (thickness of the interlayer film/ thickness of the first glass substrate) is preferably 0.1 or more and 0.5 or less. By setting the ratio of the thickness (thickness of the interlayer film/ thickness of the first glass substrate) to 0.1 or more, sound insulation properties and adhesiveness to glass substrates of the laminated glass and the like can be easily improved. Furthermore, flexural rigidity of the laminated glass can be easily obtained by setting the ratio of the thickness at 0.5 or less.

To achieve sound insulation properties and flexural rigidity, the ratio of the thickness (thickness of the interlayer film/ thickness of the first glass substrate) is more preferably 0.15 or more, further preferably 0.2 or more, and still more preferably 0.23 or more, and more preferably 0.45 or less, further preferably 0.4 or less, and still more preferably 0.3 or less.

In the case where the interlayer film has a multilayer structure and the total thickness of the interlayer film is defined as T, the first resin layer has a thickness of preferably 0.065 T or more and 0.4 T or less to balance sound insulation properties and flexural rigidity. The first resin layer has a thickness of more preferably 0.075 T or more, further preferably 0.085 T or more, and more preferably 0.37 T or less, further preferably 0.25 T or less, still more preferably 0.15 T or less, and particularly preferably 0.12 T or less to balance sound flexural rigidity and insulation properties.

More specifically, the first resin layer has a thickness of preferably 0.02 mm or more, more preferably 0.04 mm or more and further preferably 0.06 mm or more, and preferably 0.8 mm or less, more preferably 0.5 mm or less, further preferably 0.2 mm or less, still more preferably 0.15 mm or less, and particularly preferably 0.085 mm or less.

The second resin layer has a thickness of preferably 0.3 T or more and 0.935 T or less. When the thickness of the second resin layer is set to the above range, flexural rigidity and sound insulation properties of laminated glass are easily increased. When the second resin layer and the third resin layer are formed, the second resin layer and the third resin layer have a thickness of preferably 0.3 T or more and 0.4675 T or less, respectively, from the viewpoint of flexural rigidity and sound insulation properties. The second resin layer and the third resin layer have a thickness of more preferably 0.315 T or more, further preferably 0.375 or more, still more preferably 0.425 T or more and particularly preferably 0.44 T or more, and more preferably 0.4625 T or less and further preferably 0.4575 T or less, respectively.

The second resin layer and the third resin layer have a total thickness of preferably 0.6 T or more and 0.935 T or less. When the total thickness is in the above range, rigidity and sound insulation properties of laminated glass are increased. The second resin layer and the third resin layer have a total thickness of more preferably 0.63 T or more, further preferably 0.75 T or more, still more preferably 0.85 T or more and particularly preferably 0.88 T or more, and more preferably 0.925 T or less and further preferably 0.915 T or less.

The second resin layer and the third resin layer may have a different thickness, but it is preferable that the second resin layer and the third resin layer have the same thickness.

Specifically, the second resin layer and the third resin layers have a thickness of preferably 0.1 mm or more, more preferably 0.2 mm or more and further preferably 0.3 mm or more, and preferably 1.5 mm or less, more preferably 0.9 mm or less, further preferably 0.6 mm or less, and still more preferably 0.4 mm or less.

The second resin layer and the third resin layer have a total thickness of preferably 0.2 mm or more, more preferably 0.4 mm or more and further preferably 0.6 mm or more, and preferably 1.9 mm or less, more preferably 1.8 mm or less, further preferably 1.2 mm or less, and still more preferably 0.8 mm or less.

(Equivalent stiffness)

The interlayer film has an equivalent stiffness at 23°C of preferably 1.5 MPa or more. By setting the equivalent stiffness of the interlayer film to 1.5 MPa or more, flexural rigidity can be improved even if the total thickness of laminated glass is reduced. The interlayer film has an equivalent stiffness of more preferably 2 MPa or more, further preferably 4 MPa or more, and still more preferably 5.5 MPa or more.

The interlayer film has an equivalent stiffness at 23°C of preferably 30 MPa or less, more preferably 20 MPa or less, further preferably 15 MPa or less, and still more preferably 10 MPa or less to balance sound insulation properties and flexural rigidity even if the total thickness of laminated glass is reduced. The method of measuring equivalent stiffness is as described in Examples.

(Details of polyvinyl acetal resin)

In the following, polyvinyl acetal resin used for the first, second and third resin layers will be described in detail. In the following description, common features of the polyvinyl acetal resins used for the first, second and third resin layers will be simply explained as features of the "polyvinyl acetal resin." Individual features of the polyvinyl acetal resins used for the first, second and third resin layers will be explained as features of the "polyvinyl acetal resin (1)," "polyvinyl acetal resin (2)" and "polyvinyl acetal resin (3)."

Polyvinyl acetal resin is prepared by acetalizing polyvinyl alcohol (PVA) with aldehyde. In other words, it is preferable that polyvinyl acetal resin is acetalized polyvinyl alcohol (PVA). Polyvinyl alcohol (PVA) is obtained by saponifying polyvinyl ester such as polyvinyl acetate. Usually polyvinyl alcohol has a degree of saponification of 70 to 99.9% by mole. One polyvinyl acetal resin may be used alone or two or more of them may be used in combination. In the following description, PVA for preparing each of the polyvinyl acetal resins (1), (2) and (3) may be referred to as PVA (1), (2) and (3), respectively.

The PVA (1) has an average polymerization degree of preferably 200 or more, more preferably 500 or more, further preferably 1,500 or more and still more preferably 2,600 or more. When the average polymerization degree is the lower limit or more, penetration resistance of laminated glass is increased and generation of foam in laminated glass can be suppressed. The above polyvinyl alcohol (PVA) has an average polymerization degree of preferably 5,000 or less, more preferably 4,000 or less, and further preferably 3,500 or less. When the average polymerization degree is the upper limit or less, molding of the interlayer film is easy. Furthermore, when PVA (1) has an average polymerization degree in the above range, the Young's modulus of the first resin layer can be easily adjusted to the desired range.

PVA (2), (3) have an average polymerization degree of preferably 200 or more, more preferably 500 or more, further preferably 1,000 or more, and still more preferably 1,500 or more. When the average polymerization degree is the lower limit or more, penetration resistance of laminated glass is increased. The above polyvinyl alcohol (PVA) has

an average polymerization degree of preferably 5,000 or less, more preferably 4,000 or less, further preferably 3,500 or less, and still more preferably 2,500 or less. When the average polymerization degree is the upper limit or less, molding of the interlayer film is easy. Furthermore, when PVA (2), (3) has an average polymerization degree in the above range, the Young's modulus of the second resin layer and the third resin layer can be easily adjusted to the desired range.

It is preferable that the PVA (1) has an average polymerization degree higher than the average polymerization degree of PVA (2) or PVA (2) and (3). By adjusting the average polymerization degree of PVA in the polyvinyl acetal resin in this manner, flexural rigidity can be improved without reducing sound insulation properties. Furthermore, generation and growth of foam can be suppressed.

The difference between the average polymerization degree of PVA (1) and the average polymerization degree of PVA (2), and the difference between the average polymerization degree of PVA (1) and the average polymerization degree of PVA (3) are each preferably 100 or more, preferably 500 or more, further preferably 1,000 or more, and preferably 2,000 or less and more preferably 1,500 or less from the viewpoint of suppression of generation and growth of foam in laminated glass, and further from the viewpoint of formability and flexural rigidity.

The average polymerization degree of polyvinyl alcohol is determined by a method according to JIS K6726 "Testing Methods for Polyvinyl Alcohol."

Aldehyde used for acetalization is not particularly limited, and aldehyde having 1 to 10 carbon atoms is suitably used, aldehyde having 3 to 5 carbon atoms is more preferably used, aldehyde having 4 or 5 carbon atoms is further preferably used, and aldehyde having 4 carbon atoms is particularly preferably used.

Aldehyde having 1 to 10 carbon atoms described above is not particularly limited, and examples thereof include formaldehyde, acetaldehyde, propionaldehyde, n-butylaldehyde, isobutyl aldehyde, n-valeraldehyde, 2-ethylbutyl aldehyde, n-hexyl aldehyde, n-octyl aldehyde, n-nonyl aldehyde, n-decyl aldehyde and benzaldehyde. Of them, acetaldehyde, propionaldehyde, n-butylaldehyde, isobutylaldehyde, n-hexylaldehyde and n-valeraldehyde are preferred, and propionaldehyde, n-butylaldehyde, isobutylaldehyde and n-valeraldehyde are more preferred, and n-butylaldehyde and n-valeraldehyde are further preferred, and n-butylaldehyde is most preferred. Only one of the above aldehydes may be used, or two or more of them may be used in combination.

The number of carbon atoms of the acetal group in the polyvinyl acetal resin is not particularly limited and is preferably 1 to 10, more preferably 3 to 5, further preferably 4 or 5, and particularly preferably 4. A butyral group is particularly preferred as the acetal group, and thus a polyvinyl butyral resin is preferred as the polyvinyl acetal resin. In other words, in the present invention, it is preferred that the thermoplastic resin (1) in the first resin layer is a polyvinyl butyral resin, it is more preferred that both of the thermoplastic resins (1), (2) in the first and the second resin layers are a polyvinyl butyral resin, and it is further preferred that all of the thermoplastic resins (1), (2), (3) in the first, second and third resin layers are a polyvinyl butyral resin.

The content of hydroxyl groups (the amount of hydroxyl groups) in the polyvinyl acetal resin (1) is preferably 17% by mole or more and more preferably 20% by mole or more, and preferably 30% by mole or less, more preferably 27% by mole or less, further preferably 25% by mole or less, and particularly preferably 24% by mole or less.

When the above content of hydroxyl groups is the lower limit or more, adhesive force of the interlayer film is further increased. Furthermore, when the above content of hydroxyl groups is upper limit or less, the polyvinyl acetal resin (1) easily absorbs plasticizer, and thus sound insulation properties of laminated glass is further improved. In particular, when the above content of hydroxyl groups in the polyvinyl acetal resin (1) is 20% by mole or more, reaction efficiency is high and productivity is excellent. When the above content of hydroxyl groups is 27% by mole or less, sound insulation properties of laminated glass are further improved.

The respective contents of hydroxyl groups in the polyvinyl acetal resin (2) and the polyvinyl acetal resin (3) is preferably 25% by mole or more, more preferably 28% by mole or more, further preferably 30% by mole or more, and still more preferably 32% by mole or more, and particularly preferably 33% by mole or more. When the content of hydroxyl groups is the lower limit or more, flexural rigidity can be further increased while maintaining sound insulation properties. Furthermore, the respective contents of hydroxyl groups in the polyvinyl acetal resin (2) and the polyvinyl acetal resin (3) is preferably 38% by mole or less, more preferably 37% by mole or less, and further preferably 36% by mole or less. When the above content of hydroxyl groups is the upper limit or less, polyvinyl acetal resin is easily precipitated in the synthesis of polyvinyl acetal resin.

It is preferable that the content of hydroxyl groups in the above polyvinyl acetal resin (1) is smaller than the content of hydroxyl groups in the above polyvinyl acetal resin (2) to further increase rigidity while maintaining sound insulation properties. It is preferable that the content of hydroxyl groups in the above polyvinyl acetal resin (1) is smaller than the content of hydroxyl groups in the above polyvinyl acetal resin (2) and polyvinyl acetal resin (3) to further increase rigidity while maintaining sound insulation properties. The absolute value of the difference between the content of hydroxyl groups in the polyvinyl acetal resin (1) and the content of hydroxyl groups in the polyvinyl acetal resins (2), (3) is preferably 1% by mole or more, respectively. This further increases rigidity while maintaining sound insulation properties. From the above point of view, the difference between the content of hydroxyl groups is more preferably 5% by mole or more, further preferably 8% by mole or more, and particularly preferably 10% by mole or more. The absolute value of the

difference between the content of hydroxyl groups is preferably 20% by mole or less, more preferably 15% by mole or less.

The content of hydroxyl groups of polyvinyl acetal resin is the molar fraction in percentage calculated by dividing the amount of ethylene groups to which a hydroxyl group is bonded by the total amount of the ethylene groups in the main chain. The above amount of ethylene groups to which a hydroxyl group is bonded may be measured in accordance with JIS K6728 "Testing Methods for Polyvinyl butyral."

The polyvinyl acetal resin (1) has a degree of acetalization of preferably 47% by mole or more and more preferably 60% by mole or more, and preferably 85% by mole or less, more preferably 80% by mole or less and further preferably 75% by mole or less. When the degree of acetalization is the lower limit or more, the polyvinyl acetal resin (1) is more compatible with plasticizer, and thus a large amount of plasticizer can be mixed. When the degree of acetalization is the upper limit or less, the amount of aldehyde remaining in the resin can be reduced. When the acetal group is a butyral group and the polyvinyl acetal resin (1) is a polyvinyl butyral resin, the degree of acetalization means the degree of butyralization.

The polyvinyl acetal resin (2) and the polyvinyl acetal resin (3) each have a degree of acetalization (a degree of butyralization in the case of a polyvinyl butyral resin) of preferably 55% by mole or more and more preferably 60% by mole or more, and preferably 75% by mole or less and more preferably 71% by mole or less. When the degree of acetalization is the lower limit or more, the polyvinyl acetal resin is more compatible with plasticizer. When the degree of acetalization is the upper limit or less, the amount of aldehyde remaining in the resin can be reduced.

The above degree of acetalization is the molar fraction in percentage calculated by subtracting the amount of ethylene groups to which a hydroxyl group is bonded and the amount of ethylene groups to which an acetyl group is bonded from the total amount of the ethylene groups in the main chain and by dividing the resulting value by the total amount of the ethylene groups in the main chain. The degree of acetalization (degree of butyralization) may be calculated from the result measured by a method in accordance with JIS K6728 "Testing Methods for Polyvinyl butyral."

The polyvinyl acetal resin (1) has a degree of acetylation (the amount of acetyl groups) of preferably 0.01% by mole or more, more preferably 0.1% by mole or more, further preferably 7% by mole or more and particularly preferably 9% by mole or more, and preferably 30% by mole or less, more preferably 25% by mole or less, further preferably 24% by mole or less and particularly preferably 20% by mole or less. When the degree of acetylation is the lower limit or more, the polyvinyl acetal resin is more compatible with plasticizer, and thus a large amount of plasticizer can be mixed. When the degree of acetylation is the upper limit or less, moisture resistance of the interlayer film and the laminated glass is increased.

The polyvinyl acetal resin (2) and the polyvinyl acetal resin (3) each have a degree of acetylation of preferably 10% by mole or less and more preferably 2% by mole or less. When the degree of acetylation is the upper limit or less, the interlayer film has high adhesive force to glass. The polyvinyl acetal resin (2) and the polyvinyl acetal resin (3) each have a degree of acetalization of preferably 0.01% by mole or more, which is not particularly limited.

The degree of acetylation is the molar fraction in percentage calculated by dividing the amount of ethylene groups to which an acetyl group is bonded by the total amount of the ethylene groups in the main chain. The above amount of ethylene groups to which an acetyl group is bonded may be measured in accordance with JIS K6728 "Testing Methods for Polyvinyl butyral."

(Details of plasticizer)

In the following, details of the plasticizer used for the first, second and third resin layers will be described. In the following description, the plasticizers (1), (2) and (3) used for the first, second and third resin layers will be collectively explained.

Examples of plasticizers used for the first, second and third resin layers include organic ester plasticizers such as a monobasic organic acid ester and a polybasic organic acid ester, and phosphorus plasticizers such as an organic phosphate plasticizer and an organic phosphite plasticizer. Of them, an organic ester plasticizer is preferred. It is preferable that the above plasticizer is a liquid plasticizer. The liquid plasticizer is in the form of liquid at room temperature (23°C) and normal pressure (1 atm).

Examples of monobasic organic acid esters include an ester of glycol and a monobasic organic acid. Examples of glycols include polyalkylene glycol in which the alkylene unit has 2 to 4, preferably 2 or 3 carbon atoms and the number of repeating alkylene units is 2 to 10, preferably 3 to 10 and more preferably 3 to 4. Glycol may be monoalkylene glycol with 2 to 4, preferably 2 or 3 carbon atoms and 1 repeating unit.

Specific examples of glycols include ethylene glycol, diethylene glycol, triethylene glycol, tetraethylene glycol, propylene glycol, dipropylene glycol, tripropylene glycol, tetrapropylene glycol and butylene glycol.

Examples of monobasic organic acids include organic acids having 3 to 10 carbon atoms, such as butyric acid, isobutyric acid, caproic acid, 2-ethylbutyric acid, 2-ethylpentanoic acid, heptanoic acid, n-octylic acid, 2-ethylhexylic acid, n-nonylic acid and decylic acid.

Examples of preferred monobasic organic acid esters include compounds represented by the following formula

(1).

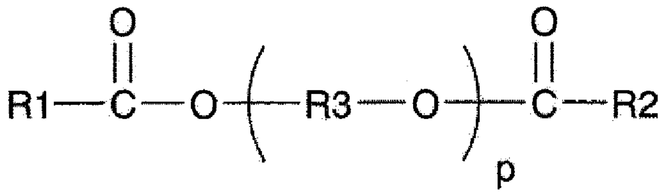

···(1)

In the formula (1), R1 and R2 each represents an organic group having 2 to 10 carbon atoms, R3 represents an ethylene group, an isopropylene group ($-CH_2CCH_3-$) or a n-propylene group and p represents an integer of 2 to 10. R1 and R2 in the formula (1) each have preferably 5 to 10, more preferably 6 to 10 carbon atoms. The organic group in R1 and R2 is preferably a hydrocarbon group and more preferably an alkyl group. p is preferably 3 or more, and also preferably 4 or less.

Specific examples of glycol esters include ethylene glycol di-2-ethyl butyrate, 1,2-propylene glycol di-2-ethyl butyrate, 1,3-propylene glycol di-2-ethyl butyrate, 1,4-butylene glycol di-2-ethyl butyrate, 1,2-butylene glycol di-2-ethyl butyrate, diethylene glycol di-2-ethyl butyrate, diethylene glycol dicaprylate, diethylene glycol di-2-ethylhexanoate, dipropylene glycol di-2-ethyl butyrate, triethylene glycol di-2-ethylhexanoate, triethylene glycol dicaprylate, triethylene glycol di-2-ethyl pentanoate, triethylene glycol di-n-heptanoate, triethylene glycol di-2-ethyl butyrate, triethylene glycol di-2-ethyl propanoate, tetraethylene glycol di-n-heptanoate, tetraethylene glycol di-2-ethyl hexanoate and tetraethylene glycol di-2-ethyl butyrate.

Examples of polybasic organic acid ester include ester compounds of a dibasic organic acid having 4 to 12 carbon atoms, such as adipic acid, sebacic acid and azelaic acid, and alcohol having 4 to 10 carbon atoms. Alcohol having 4 to 10 carbon atoms may be linear, or may have a branched structure or a cyclic structure.

Specific examples thereof include dibutyl sebacate, dioctyl azelate, dihexyl adipate, dioctyl adipate, hexylcyclohexyl adipate, diisononyl adipate, heptylnonyl adipate, di-(2-butoxyethyl) adipate, dibutylcarbitol adipate and mixed adipic acid ester. Furthermore, oil-modified sebacic acid alkyd may be used. Examples of mixed adipic acid esters include an adipic acid ester prepared from two or more alcohols selected from alkyl alcohol having 4 to 9 carbon atoms and cyclic alcohol having 4 to 9 carbon atoms.

Examples of organic phosphorus plasticizers include a phosphoric acid ester such as tributoxyethyl phosphate, isodecylphenyl phosphate and triisopropyl phosphate.

One plasticizer may be used alone or two or more of them may be used in combination.

It is preferable that the plasticizer is selected from di-(2-butoxyethyl) adipate (DBEA), triethylene glycol di-2-ethyl hexanoate (3GO), triethylene glycol di-2-ethyl butyrate (3GH) and triethylene glycol di-2-ethyl propanoate, out of the above plasticizers. It is more preferred that the plasticizer is selected from triethylene glycol di-2-ethyl hexanoate (3GO), triethylene glycol di-2-ethyl butyrate (3GH) and triethylene glycol di-2-ethyl propanoate, and it is further preferable that the plasticizer is selected from triethylene glycol di-2-ethyl hexanoate and triethylene glycol di-2-ethyl butyrate, and triethylene glycol di-2-ethyl hexanoate is particularly preferred.

(Method for producing interlayer film)

In the case of a monolayer structure, the interlayer film according to the present invention may be produced by forming the first resin layer by molding a thermoplastic resin, or a resin composition including a thermoplastic resin and at least one selected from a filler, a plasticizer and other additives by a known molding method such as extrusion molding and press molding. The resin composition is prepared by mixing components constituting the resin composition. When the resin composition includes a plasticizer and a filler, a dispersion is fabricated by previously dispersing a filler such as silica particles in a plasticizer, and then the dispersant is mixed with other components such as a thermoplastic resin to prepare a resin composition.

In the case of a multilayer structure, the respective layers constituting the interlayer film (the first resin layer, the second resin layer, the third resin layer and the like) may be molded using a thermoplastic resin or a resin composition, and the layers are laminated to form the interlayer film. Alternatively, the respective layers constituting the interlayer film may be laminated while molding by co-extrusion and the like to form the interlayer film. In the case of a multilayer structure, a thermoplastic resin or a resin composition for forming the second resin layer, or the second resin layer and the third resin layer may be prepared in addition to the thermoplastic resin or the resin composition for forming the first resin layer.

It is preferable that the second resin layer and the third resin layer may include the same polyvinyl acetal resin, and it is more preferred that the second resin layer and the third resin layer may include the same polyvinyl acetal resin

and the same plasticizer because the interlayer film can be produced at high efficiency. It is further preferred that the second resin layer and the third resin layer is made of the same composition.

[Glass substrate]

In the laminated glass of the present invention, the first and the second glass substrates 21, 22 are bonded through the interlayer film 10 as shown in Figs. 1 to 3. Referring to a side window, the first glass substrate 21 is disposed on a vehicle exterior side and the second glass substrate 22 is disposed on a vehicle interior side.

Various types of glass plates may be used as the first and the second glass substrates. Either inorganic glass or organic glass may be used as the glass plate, and inorganic glass is preferred. Examples of inorganic glass include, but are not limited to, clear glass, clear float glass, float glass, tempered glass, semi-tempered glass, colored glass, polished plate glass, figured glass, wired plate glass, vertically wired plate glass, ultraviolet absorbing plate glass, infrared reflecting plate glass, infrared absorbing plate glass and green glass.

Glass called resin glass is generally used as organic glass. Examples thereof include, but are not particularly limited to, organic glass made of a polycarbonate plate, a polymethyl methacrylate plate or polyester plate.

The two glass substrates may be made of the same or a different material. For example, while one may be inorganic glass and the other may be organic glass, it is preferable that both of the two glass substrates are inorganic glass or organic glass.

Furthermore, when both of the two glass substrates are inorganic glass, the same or different type of inorganic glass may be used as the first glass substrate and the second glass substrate. For example, semi-tempered glass may be used as the first glass substrate on a vehicle exterior side and clear glass or green glass may be used as the second glass substrate on a vehicle interior side.

Alternatively, semi-tempered glass or tempered glass may be used as the second glass substrate on a vehicle interior side. Use of semi-tempered glass or tempered glass as the thin second glass substrate allows flexural rigidity and mechanical strength of laminated glass to be easily increased. In that case, glass other than semi-tempered glass or tempered glass may be used as the first glass substrate on a vehicle exterior side, and for example, any glass such as clear glass, green glass, clear float glass and float glass may be used.

(Flexural rigidity)

It is preferable that the laminated glass of the present invention has a flexural rigidity of 60 N/ mm or more. By setting flexural rigidity to 60 N/ mm or more, flexural rigidity suitable for side windows can be imparted to laminated glass. Then flapping of side windows in high speed running with the window open can be easily suppressed. The laminated glass has a flexural rigidity of more preferably 90 N/ mm or more, further preferably 120 N/ mm or more, and still more preferably 130 N/ mm or more, and particularly preferably 150 N/ mm or more. The upper limit of the flexural rigidity is not particularly limited, and for example may be 500 N/ mm or less, or 300 N/ mm or less.

For flexural rigidity, stress that acts on laminated glass when displacement is applied thereto from the side of the second glass substrate preferably be measured. More specifically, flexural rigidity can be measured by the method described in Examples.

(Method for producing laminated glass)

The method for producing laminated glass is not particularly limited, and laminated glass may be produced by disposing an interlayer film or a resin layer constituting the interlayer film between the first and the second glass substrates and bonding them. More specifically, the interlayer film or resin layers are interposed between the first and the second glass substrates and the resultant is passed through a pressure roll or evacuated in a rubber bag to remove air remaining between the two glass substrates and the interlayer film. Then the resultant is preliminary bonded at about 70 to 110°C to prepare a laminated body. Next the laminated body is put in an autoclave or pressed to be press-bonded at about 120 to 150°C at a pressure of 1 to 1.5 MPa. Laminated glass can be prepared in this manner.

When the interlayer film has a plurality of resin layers, an interlayer film in which layers have been previously integrated may be disposed between the two glass substrate in the production of laminated glass. Alternatively, a plurality of resin layers (the first resin layer, the second resin layer and the third resin layer and the like) may be disposed between the glass substrates, and an interlayer film may be fabricated at the time of producing laminated glass.

The laminated glass of the present invention is used for a side window of an automobile. The laminated glass of the present invention has sound insulation properties and has increased flexural rigidity while achieving thinning up to a total thickness of glass of 5 mm or less. Thus, when the laminated glass is used as a side window, soundproofing properties inside the car are improved and flexural rigidity suitable for the side window can be provided. For example, flapping of a side window when the window is opened can be suppressed and the trouble that the side window is not

fitted in the door frame when an opened window is closed during traveling is less likely to occur.

## Examples

The present invention will be described in more detail with reference to Examples, but the present invention is not limited to the Examples.
Physical properties and methods of evaluation are as follows.

[Particle size of filler]

The first resin layer was dissolved in THF at 23°C and the filler was separated by centrifugation. The filler separated was dispersed in water, and the data of particle size distribution was obtained by a laser diffraction method using a measurement system "1090L" (made by CILAS) in a measurement range of 0.04 to 500 μm. d50 (the particle size at a cumulative volume of 50%) was measured to determine the average secondary particle size (d50) of the filler.

[Glass transition temperature]

The first resin layer was separated from the interlayer film prepared, and the first resin layer was press-molded at 150°C. Then viscoelasticity was measured by a viscoelastometer "Rheometer ARES-G2" made by TA Instruments. Using a parallel plate with a diameter of 8 mm, the sample was punched and viscoelasticity was measured in a shear mode under conditions of temperature increase from -30°C to 100°C at a temperature increase rate of 3°C/ minute, a frequency of 1 Hz and a strain of 1%. In the results of measurement, the peak temperature of loss tangent was determined as glass transition temperature Tg (°C). The glass transition temperature of the second resin layer and the third resin layer was determined by the same method.

[Young's modulus]

A resin composition was prepared in the same manner as in Examples and Comparative Examples, and the resulting resin composition was press-molded at 150°C to give a formed product with a thickness of 800 μm (the first resin layer, the second resin layer and the third resin layer). The resulting formed product was punched with Super Dumbbell Cutter "SDK-600" made by Dumbbell Co., Ltd. to give a specimen with a total length of 120 mm. The resulting specimen was stored at 23°C and a humidity of 30%RH for 12 hours. Then, a tensile test of the specimen was performed in a thermostatic chamber at 23°C using "TENSILON" made by A & D Company, Ltd. at 200 mm/ minute. The slope in the small strain region of the resulting stress-strain curve was calculated and defined as the Young's modulus.
In the measurement, the specimen was marked with a reference line at a position 40 mm from both ends (the distance between the reference lines: 40 mm), and the thickness of the specimen between the reference lines was measured. The thickness of the specimen at the respective reference lines and the thickness of the specimen at the center between the two reference lines were measured, and an average thereof was defined as the thickness between the reference lines, and the cross-sectional area was calculated from the thickness. The thickness was measured by "Digimatic Indicator" (ID-C112C) made by Mitsutoyo Corporation.
A tensile test of the specimen was performed in a thermostatic chamber at 23°C using TENSILON "RTE-1210" made by A & D Company, Ltd. at 200 mm/ minute with a gripping distance of 7 cm. Stress and strain were calculated by the following equations.

$$\text{Stress} = \text{load/ initial cross-sectional area between reference lines}$$

$$\text{Strain} = (\text{Amount of increase of gripping distance/ initial distance between reference lines}) \times 100$$

In the measurement of Young's modulus of the first resin layer, the slope at a strain of 0 to 10% in the resulting stress-strain curve was defined as the Young's modulus. Likewise, in the measurement of Young's modulus of the second resin layer and the third resin layer, the slope at a strain of 0 to 10% in the resulting stress-strain curve was defined as the Young's modulus.

[Equivalent stiffness]

Equivalent stiffness E* of the interlayer film was calculated from the Young's modulus and the thickness of each of the first resin layer, the second resin layer and the third resin layer by the following equation. The thickness of the first resin layer, the second resin layer and the third resin layer was measured in the observation of a cross-section of the first resin layer, the second resin layer and the third resin layer by an optical microscope.

$$\text{Equation (X): } E^* = (\Sigma_i ai)/ (\Sigma_i ai/ Ei)$$

In equation (X), Ei represents the Young's modulus of the i-th layer and ai represents the thickness of the i-th layer. $\Sigma_i$ means to calculate the sum of the values of the i layers.

[Sound insulation properties]

The resulting laminated glass was vibrated by a vibration generator for damping test ("Vibration Generator G21-005D" made by Shinken Co., Ltd.). Vibration characteristics obtained in the test were amplified by a mechanical impedance measurement device ("XG-81" made by RION Co., Ltd.) and the vibration spectrum was analyzed by a FFT spectrum analyzer ("FFT analyzer HP3582A" made by Yokogawa Hewlett-Packard). A graph illustrating the relation between sound frequency (Hz) and sound transmission loss (dB) at 20°C was prepared from the rate between the resulting loss factor and resonance frequency of the laminated glass to determine the minimum sound transmission loss (TL values) at a sound frequency of about 2,000 Hz. A higher TL value suggests that the laminated glass has higher sound insulation properties. Sound insulation properties were evaluated based on the following criteria.

[Criteria for evaluating sound insulation properties]

A: TL value of 35 dB or more
B: TL value of less than 35dB

[Flexural Rigidity]

Flexural rigidity of laminated glass was evaluated by the test method schematically shown in Fig. 4. "TENSILON" made by A & D Company, Ltd. equipped with a 3-point bending test jig was used as a measurement device. Conditions of measurement include a temperature of measurement of 23°C (23°C ±3 °C), a distance between the fulcrums D1 of 17cm, the length of the sample D2 of 25 cm and the width of 10 cm. The laminated glass 20 was deformed at a displacement rate of 1 mm/ minute in the direction of F, and the stress when a displacement of 1.2 mm was applied thereto was measured to calculate flexural rigidity. As shown in Fig. 4, the laminated glass 20 was deformed on the side of the second glass substrate 22. A higher value of flexural rigidity suggests that the laminated glass has more excellent flexural rigidity.

[Example 1]

Silica particles (trade name "Nipsil SP-200" made by Tosoh Silica Corporation, precipitated silica) was pulverized using a dry jet mill to fabricate silica particles.

100 parts by mass of a polyvinyl butyral resin, which is a polyvinyl acetal resin, 75 parts by mass of triethylene glycol-di-2-ethyl hexanoate (3GO), which is a plasticizer, and 20 parts by mass of the pulverized silica particles, a filler, were kneaded in a co-extruder to prepare a resin composition for the first resin layer.

Furthermore, 100 parts by mass of a polyvinyl butyral resin, which is a polyvinyl acetal resin, and 32 parts by mass of triethylene glycol-di-2-ethyl hexanoate (3GO), which is a plasticizer, were kneaded to prepare the resin composition for the second and the third resin layers. Details of the polyvinyl butyral resin used for the first to third resin layers are as shown in Table 1.

The resin compositions for the first to third resin layers were co-extruded through the above co-extruder to give an interlayer film having a three-layer structure of the second resin layer/ the first resin layer/ the third resin layer with a total thickness of 760 μm. The thickness of the layers of the interlayer film is as shown in Table 1. The silica particles in the first resin layer have an average secondary particle size of 0.35 μm.

The resulting interlayer film was cut into a size of 25 cm long × 10 cm wide. Next, the interlayer film was

sandwiched between two glass substrates of float glass (25 cm long × 10 cm wide) having the thickness shown in Table 1 to give a laminated body. The laminated body was put in a rubber bag and the bag was deaerated at a degree of vacuum of 2.6 kPa for 20 minutes, and the bag was transferred into an oven while maintaining the state of deaeration, and further kept at 90°C for 30 minutes to vacuum press and preliminarily press-bond the laminated body. The laminated body preliminarily press-bonded was press-bonded in the autoclave under conditions of 135°C and a pressure of 1.2 MPa for 20 minutes to give laminated glass.

[Examples 2, 3]

The procedure was the same as in Example 1 except for changing the thickness of the first and the second glass substrates as shown in Table 1.

[Examples 4 to 6]

In Examples 4 to 6, the procedure was the same as in Examples 1 to 3, respectively, except for changing the type of the polyvinyl butyral resin used for the resin layers, the blend of the resin composition for forming the resin layers and the thickness of the resin layers as shown in Table 1.

[Example 7 to 12]

The procedure was the same as in Example 1 except for using float glass for the first glass substrate and tempered glass for the second glass substrate, and changing the thickness of the first and the second glass substrates as shown in Table 1.

[Examples 13 to 18]

In Examples 13 to 18, the procedure was the same as in Examples 7 to 12, respectively, except for changing the type of the polyvinyl butyral resin used for the resin layers, the blend of the resin composition for forming the resin layers and the thickness of the resin layers as shown in Table 1.

[Comparative Examples 1, 2]

The procedure was the same as in Example 4 except for changing the thickness of the first and the second glass substrates as shown in Table 1.

[Table 1]

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Comparative Example 1 | Comparative Example 2 |
|---|---|---|---|---|---|---|---|---|---|---|---|---|---|---|---|---|---|---|---|---|---|---|---|
| First glass substrate [mm] | | | | 3 | 2.5 | 2 | 3 | 2.5 | 2 | 3.2 | 3.2 | 2.5 | 2.5 | 2.1 | 2.1 | 3.2 | 3.2 | 2.5 | 2.5 | 2.1 | 2.1 | 1.6 | 1.4 |
| Second glass substrate [mm] | | | | 1 | 1.6 | 1 | 1 | 1.6 | 1 | 0.7 | 0.55 | 0.7 | 0.55 | 0.7 | 0.5 | 0.7 | 0.55 | 0.7 | 0.55 | 0.7 | 0.5 | 1.6 | 1.4 |
| Total thickness of glass substrates [mm] | | | | 4 | 4.1 | 3 | 4 | 4.1 | 3 | 3.9 | 3.75 | 3.2 | 3.05 | 2.8 | 2.6 | 3.9 | 3.75 | 3.2 | 3.1 | 2.8 | 2.6 | 3.2 | 2.8 |
| Rate of thickness of glass (First glass substrate/Total thickness of glass substrates) | | | | 0.75 | 0.61 | 0.67 | 0.75 | 0.61 | 0.67 | 0.82 | 0.85 | 0.78 | 0.82 | 0.75 | 0.81 | 0.82 | 0.85 | 0.78 | 0.82 | 0.75 | 0.81 | 0.50 | 0.50 |
| Interlayer film | Composition of first layer | Thickness | μm | 70 | 70 | 70 | 100 | 100 | 100 | 70 | 70 | 70 | 70 | 70 | 70 | 100 | 100 | 100 | 100 | 100 | 100 | 100 | 100 |
| | | Polyvinyl acetal resin: Average polymerization degree of PVA | | 3000 | 3000 | 3000 | 3000 | 3000 | 3000 | 3000 | 3000 | 3000 | 3000 | 3000 | 3000 | 3000 | 3000 | 3000 | 3000 | 3000 | 3000 | 3000 | 3000 |
| | | Polyvinyl acetal resin: Content of hydroxyl group | % by mole | 23.2 | 23.2 | 23.2 | 24.1 | 24.1 | 24.1 | 23.2 | 23.2 | 23.2 | 23.2 | 23.2 | 23.2 | 24.1 | 24.1 | 24.1 | 24.1 | 24.1 | 24.1 | 24.1 | 24.1 |
| | | Polyvinyl acetal resin: Degree of acetylation | % by mole | 12.1 | 12.1 | 12.1 | 12.1 | 12.1 | 12.1 | 12.1 | 12.1 | 12.1 | 12.1 | 12.1 | 12.1 | 12.1 | 12.1 | 12.1 | 12.1 | 12.1 | 12.1 | 12.1 | 12.1 |
| | | Polyvinyl acetal resin: Degree of acetalization | % by mole | 64.7 | 64.7 | 64.7 | 63.8 | 63.8 | 63.8 | 64.7 | 64.7 | 64.7 | 64.7 | 64.7 | 64.7 | 63.8 | 63.8 | 63.8 | 63.8 | 63.8 | 63.8 | 63.8 | 63.8 |
| | | Polyvinyl acetal resin: Content | Part by mass | 100 | 100 | 100 | 100 | 100 | 100 | 100 | 100 | 100 | 100 | 100 | 100 | 100 | 100 | 100 | 100 | 100 | 100 | 100 | 100 |
| | | Plasticizer: Type | | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO |
| | | Plasticizer: Content | Part by mass | 75 | 75 | 75 | 75 | 75 | 75 | 75 | 75 | 75 | 75 | 75 | 75 | 75 | 75 | 75 | 75 | 75 | 75 | 75 | 75 |
| | | Silica particle: Type | | SP-200 | SP-200 | SP-200 | - | - | - | SP-200 | SP-200 | SP-200 | SP-200 | SP-200 | SP-200 | - | - | - | - | - | - | - | - |
| | | Silica particle: Content | Part by mass | 20 | 20 | 20 | - | - | - | 20 | 20 | 20 | 20 | 20 | 20 | - | - | - | - | - | - | - | - |
| | | Glass transition temperature | °C | -4 | -4 | -4 | -4 | -4 | -4 | -4 | -4 | -4 | -4 | -4 | -4 | -4 | -4 | -4 | -4 | -4 | -4 | -4 | -4 |
| | | Young's modulus | MPa | 0.72 | 0.72 | 0.72 | 0.40 | 0.40 | 0.40 | 0.72 | 0.72 | 0.72 | 0.72 | 0.72 | 0.72 | 0.40 | 0.40 | 0.40 | 0.40 | 0.40 | 0.40 | 0.40 | 0.40 |
| | Composition of second and third layers | Each thickness | μm | 345 | 345 | 345 | 330 | 330 | 330 | 345 | 345 | 345 | 345 | 345 | 345 | 330 | 330 | 330 | 330 | 330 | 330 | 330 | 330 |
| | | Polyvinyl acetal resin: Average polymerization degree of PVA | | 1700 | 1700 | 1700 | 1700 | 1700 | 1700 | 1700 | 1700 | 1700 | 1700 | 1700 | 1700 | 1700 | 1700 | 1700 | 1700 | 1700 | 1700 | 1700 | 1700 |
| | | Polyvinyl acetal resin: Content of hydroxyl group | % by mole | 34.5 | 34.5 | 34.5 | 30.7 | 30.7 | 30.7 | 34.5 | 34.5 | 34.5 | 34.5 | 34.5 | 34.5 | 30.7 | 30.7 | 30.7 | 30.7 | 30.7 | 30.7 | 30.7 | 30.7 |
| | | Polyvinyl acetal resin: Degree of acetylation | % by mole | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| | | Polyvinyl acetal resin: Degree of acetalization | % by mole | 64.7 | 64.7 | 64.7 | 68.5 | 68.5 | 68.5 | 64.7 | 64.7 | 64.7 | 64.7 | 64.7 | 64.7 | 68.5 | 68.5 | 68.5 | 68.5 | 68.5 | 68.5 | 68.5 | 68.5 |
| | | Polyvinyl acetal resin: Content | Part by mass | 100 | 100 | 100 | 100 | 100 | 100 | 100 | 100 | 100 | 100 | 100 | 100 | 100 | 100 | 100 | 100 | 100 | 100 | 100 | 100 |
| | | Plasticizer: Type | | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO |
| | | Plasticizer: Content | Part by mass | 32 | 32 | 32 | 39 | 39 | 39 | 32 | 32 | 32 | 32 | 32 | 32 | 39 | 39 | 39 | 39 | 39 | 39 | 39 | 39 |
| | | Glass transition temperature | °C | 39 | 39 | 39 | 28 | 28 | 28 | 39 | 39 | 39 | 39 | 39 | 39 | 28 | 28 | 28 | 28 | 28 | 28 | 28 | 28 |
| | | Young's modulus | MPa | 35.0 | 35.0 | 35.0 | 5.3 | 5.3 | 5.3 | 35.0 | 35.0 | 35.0 | 35.0 | 35.0 | 35.0 | 5.3 | 5.3 | 5.3 | 5.3 | 5.3 | 5.3 | 5.3 | 5.3 |
| | Equivalent stiffness | | MPa | 6.50 | 6.50 | 6.50 | 2.06 | 2.06 | 2.06 | 6.50 | 6.50 | 6.50 | 6.50 | 6.50 | 6.50 | 2.06 | 2.06 | 2.06 | 2.06 | 2.06 | 2.06 | 2.06 | 2.06 |
| Thickness of interlayer film/ thickness of first glass substrate | | | | 0.25 | 0.30 | 0.38 | 0.25 | 0.30 | 0.38 | 0.24 | 0.24 | 0.30 | 0.30 | 0.36 | 0.36 | 0.24 | 0.24 | 0.30 | 0.30 | 0.36 | 0.36 | 0.48 | 0.54 |
| Sound insulation properties (TL method) | | | | A | A | A | A | A | A | A | A | A | A | A | A | A | A | A | A | A | A | A | A |
| Flexural rigidity [N/mm] | | | | 170 | 169 | 91 | 137 | 128 | 66 | 229 | 223 | 124 | 117 | 92 | 87 | 197 | 192 | 107 | 108 | 70 | 69 | 58 | 44 |

As described above, laminated glass with high flexural rigidity suitable for side windows with increased sound insulation properties was obtained in Examples by setting the first glass substrate located on a vehicle exterior side thicker than the second glass substrate and by setting the thickness of the first glass substrate to 2 mm or more, even if the total thickness of the glass substrates was reduced to as thin as 5 mm or less.

By contrast, in Comparative Examples, since the thickness of the first glass substrate located on a vehicle exterior side was set to less than 2 mm, laminated glass with high flexural rigidity suitable for side windows was not obtained.

Reference Signs List

10 Interlayer film
11 First resin layer
12 Second resin layer
13 Third resin layer
20 Laminated glass
21 First glass substrate
22 Second glass substrate

**Claims**

**1.** A laminated glass for a side window, comprising a first glass substrate, a second glass substrate, and an interlayer film disposed between the first glass substrate and the second glass substrate,

the first glass substrate and the second glass substrate having a total thickness of 5 mm or less, and
the first glass substrate being located on a vehicle exterior side and being thicker than the second glass substrate and having a thickness of 2 mm or more.

**2.** The laminated glass for a side window according to claim 1, wherein

the interlayer film comprises at least a first resin layer, and
the first resin layer has a Young's modulus at 23°C of less than 1 MPa.

**3.** The laminated glass for a side window according to claim 2, wherein

the interlayer film further comprises a second resin layer provided on one surface of the first resin layer, and
the second resin layer has a Young's modulus at 23°C of higher than the Young's modulus at 23°C of the first resin layer.

**4.** The laminated glass for a side window according to claim 3, wherein

the interlayer film further comprises a third resin layer provided on the other surface of the first resin layer, and
the third resin layer has a Young's modulus at 23°C of higher than the Young's modulus at 23°C of the first resin layer.

**5.** The laminated glass for a side window according to any one of claims 1 to 4, wherein a ratio of the thickness of the first glass substrate to the total thickness (thickness of the first glass substrate/ total thickness) is 0.6 or more.

**6.** The laminated glass for a side window according to any one of claims 1 to 5, wherein the interlayer film has an equivalent stiffness at 23°C of 1.5 MPa or more.

**7.** The laminated glass for a side window according to any one of claims 1 to 6, wherein a ratio of the thickness of the interlayer film to the thickness of the first glass substrate (thickness of the interlayer film/ thickness of the first glass substrate) is 0.1 or more and 0.5 or less.

**8.** The laminated glass for a side window according to any one of claims 1 to 7, wherein

the interlayer film comprises at least the first resin layer, and
the first resin layer comprises a filler.

**9.** The laminated glass for a side window according to any one of claims 1 to 8, wherein

the interlayer film comprises at least the first resin layer, and
the first resin layer comprises a polyvinyl acetal resin.

**10.** The laminated glass for a side window according to any one of claims 1 to 9, wherein

the interlayer film comprises at least the first resin layer, and
the first resin layer comprises a plasticizer.

Fig. 1

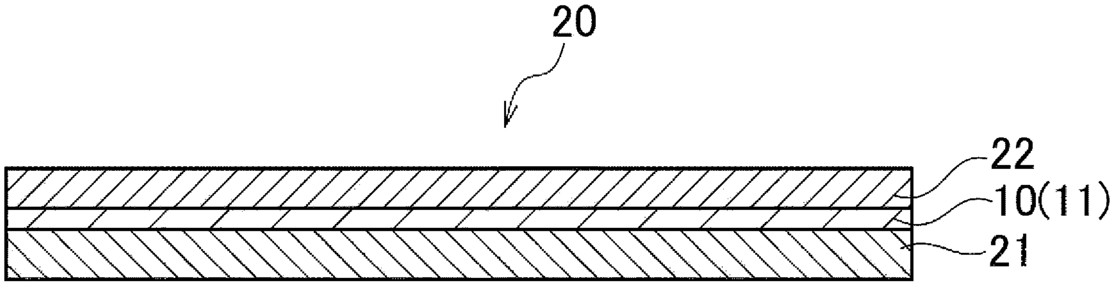


Fig. 2

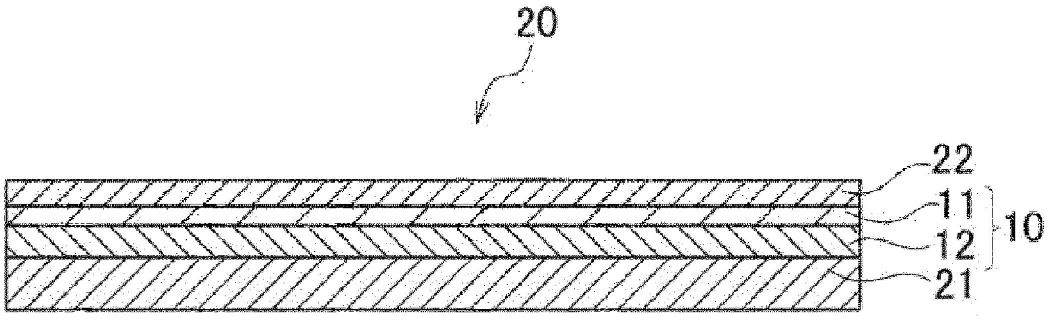


Fig. 3

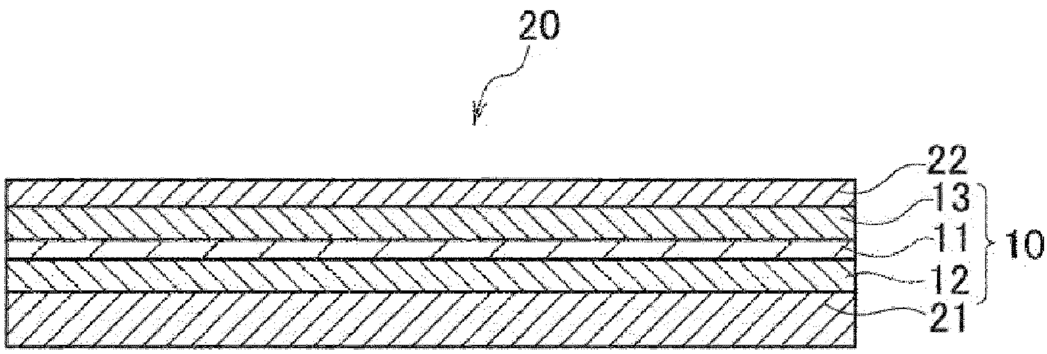

Fig. 4

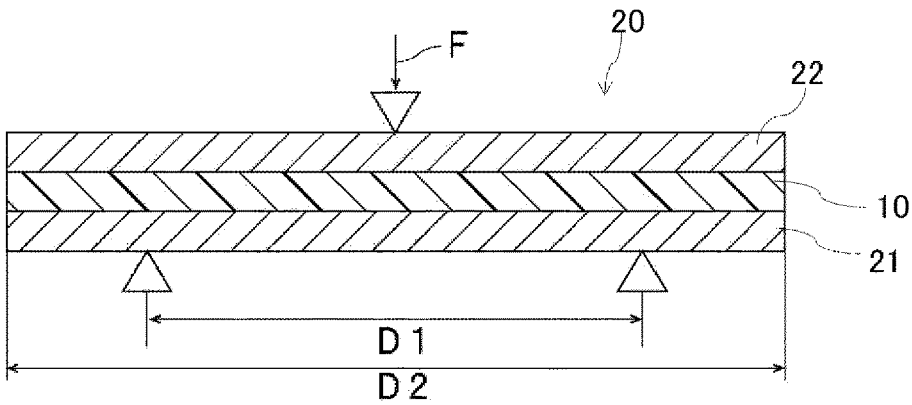

**INTERNATIONAL SEARCH REPORT**

International application No.
**PCT/JP2021/035701**

**A. CLASSIFICATION OF SUBJECT MATTER**

***B32B 17/10***(2006.01)i; ***C03C 27/12***(2006.01)i; ***B60J 1/00***(2006.01)i
FI: C03C27/12 Z; C03C27/12 D; B32B17/10; B60J1/00 H

According to International Patent Classification (IPC) or to both national classification and IPC

**B. FIELDS SEARCHED**

Minimum documentation searched (classification system followed by classification symbols)

C03C27/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2019-209862 A (NIPPON SHEET GLASS CO., LTD.) 12 December 2019 (2019-12-12) claims, paragraphs [0001]-[0004], [0021]-[0048] | 1-7, 9, 10<br>8 |
| X<br>Y | JP 2018-30459 A (NIPPON SHEET GLASS CO., LTD.) 01 March 2018 (2018-03-01) paragraphs [0026]-[0050] | 1, 5-7, 9, 10<br>8 |
| Y | JP 2017-193485 A (SEKISUI CHEM. CO., LTD.) 26 October 2017 (2017-10-26) paragraphs [0009]-[0014], [0048], [0067], [0119], [0120], [0135] | 8 |
| A | JP 2019-151538 A (NIPPON SHEET GLASS CO., LTD.) 12 September 2019 (2019-09-12) paragraphs [0045]-[0080] | 1-10 |
| A | JP 2019-1664 A (NIPPON SHEET GLASS CO., LTD.) 10 January 2019 (2019-01-10) paragraphs [0028]-[0044], [0104] | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2021** | **30 November 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/035701**

| Patent document cited in search report | Publication date (day/month/year) | Patent family member(s) | Publication date (day/month/year) |
|---|---|---|---|
| JP 2019-209862 A | 12 December 2019 | WO 2019/235449 A1 | |
| JP 2018-30459 A | 01 March 2018 | US 2019/0193530 A1<br>paragraphs [0055]-[0102]<br>WO 2018/038172 A1<br>EP 3505405 A1 | |
| JP 2017-193485 A | 26 October 2017 | US 2018/0001600 A1<br>paragraphs [0011]-[0016], [0052], [0072], [0130], [0131], [0149]<br>WO 2016/158694 A1<br>EP 3279158 A1 | |
| JP 2019-151538 A | 12 September 2019 | WO 2019/172313 A1 | |
| JP 2019-1664 A | 10 January 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015151308 A
- JP 2015168592 A
- JP 2014500816 A